# EUROPEAN PATENT APPLICATION

(11) **EP 4 850 775 A1**
(43) Date of publication of application: **09.12.2026**
(21) Application number: 25180256.7
(22) Date of filing: 02.06.2025
(51) Int. Cl.: A63F 13/27, A63F 13/42, A63F 13/44, A63F 13/75, A63F 13/77, A63F 13/843, A63F 13/847

(54) **COLLABORATIVE VIDEO GAMING METHOD AND SYSTEM**

(71) Applicant: FunDoubler AB, 126 32 Hägersten (SE)
(72) Inventor: BERGSTRÖM, Per Oscar, 135 43 TYRESÖ (SE); BERGQVIST, Ulf, 127 41 SKÄRHOLMEN (SE); VITASP, Jarl, 168 39 BROMMA (SE)
(74) Representative: Öberg & Sjöberg AB

(57) **Abstract**

A method for providing input to a video game displayed on a first display, the method comprises:
- dynamically collecting a plurality of control commands from each of a plurality of smart devices, each control command having an identifier
- ordering the control commands in a queue,
- sequentially determining, or deriving, continuous subsets of the control commands in the queue
- sequentially performing statistical calculations on the continuous subsets,
- sequentially determining inputs to the video game based on the statistical calculations.

## Description

### Technical field

The proposed technology relates to methods and systems for providing collaborative video gaming for crowds, or a plurality of people, attending venues, such as sports events.

### Background

Sports events may draw large crowds, or large numbers of spectators, that attend a venue to follow, support and cheer for teams that perform at the sports event. Such venues often have large displays, such as jumbotrons to show game score, or ads, or other information.

Sports events may involve time periods wherein no sports activities are performed. For example, during an ice hockey game, the gameplay is performed in three 20-minute periods with intermissions after the first and second periods. Further breaks in gameplay may be due to timeouts. A problem with intermissions or breaks in gameplay is that of crowd engagement. During times of intermission, the tempo and excitement of the crowd may reduce from high levels before the intermission. It is a desire to prevent this and maintain a high level of crowd engagement during intermissions, such that the time spent waiting for the gameplay to recommence is perceived as less longwinded.

Sports events are just one example, and a further example is during concerts when the crowd is admitted but the concert has not yet commenced. During large arena concert this time may be one or several hours, depending on the size of the arena and the time needed to admit large amounts of people.

It is therefore a desire to provide methods and systems that enable activities for the crowd during such time periods.

### Object

The proposed technology aims at obviating the aforementioned disadvantages and failings of previously known technologies. In particular, it is an object of the invention to provide methods for collaborative video gaming, and systems for performing the methods for collaborative video gaming.

### Summary

According to a first aspect, at least the primary object is attained by a method for providing input to a video game displayed on a first display, the method comprises:
- dynamically collecting a plurality of control commands from each of a plurality of smart devices, each control command having an identifier,
- ordering the control commands in a queue,
- sequentially determining, or deriving, continuous subsets of the control commands in the queue,
- sequentially performing statistical calculations on the continuous subsets,
- sequentially determining inputs to the video game based on the statistical calculations.

According to a second aspect, at least the above objects are achieved by a system, for providing input to a video game displayed on a first display, wherein the system comprises: the first display, a plurality of smart devices, and a processor operatively connected to the first display and the plurality of smart devices, wherein the processor is configured to perform the method according to the first aspect of the proposed technology.

According to a third aspect, the above objects are achieved by a computer program product for being used in a system, for providing input to a video game displayed on the first display, wherein the system comprises: the first display, a plurality of smart devices, and a processor operatively connected to the first display and the plurality of smart devices. The computer program product comprises program code instructions configured to, when executed by the processor of the system, cause the processor to perform the method according to the first aspect of the proposed technology.

According to a fourth aspect of the proposed technology, a non-transient memory is proposed on which a computer program product according to the third aspect of the proposed technology is stored. The non-transient memory may form part of computer server system, which may be at a remote location.

The above aspects allow for large number of users, each having, or controlling, a smart device, to play a video game displayed on a shared display, or a plurality of shared displays, wherein the method collects control commands and interprets, or aggregates, the will, o desire, of the users based on the collected control commands, and provides inputs to the video game that is displayed on the shared display (s) visible to the users, thereby enabling the users to play the video game together.

It specified above that the method comprises the step of dynamically collecting a plurality of control commands from each of a plurality of smart devices. The step of collecting the plurality of control commands may be continuously performed. This means that the processor may continuously listen for and receive, or collect, control commands.

It is understood that the control commands are collected from the plurality of smart devices. It is further understood that each smart device may be operated by, or used by, a respective user, or participant, and that the control commands are generated in each smart device. Worded differently, the method may collect control commands from a plurality of users, or participants, wherein each participant may have, or use, an individual smart device to generate control commands. This means that the method may be applied for collaborative gaming for a plurality of participants that each has a smart device. The method thus enables collaborative gaming wherein the plurality of users provide shared, or collaborative, control inputs to the video game displayed on the first display.

It is understood that a game is a structured type of play, usually undertaken for entertainment or fun, and sometimes used as an educational tool.

It is also understood that a video game, or computer game, is an electronic game that involves interaction with a user interface or input means to generate visual feedback on a display device. It is further understood that a video game may involve performing actions that results in progress or that results in a score to rank the performance of playing the video game. It is also understood that the video game may involve creative activities that do not result in a final score, or scoring. For example, the game may involve collaborative creative activities, such as collaborative drawing using a joint canvas framework. It is further understood that the game may be in the form of a quiz that tests the knowledge of the participants by providing questions and a plurality of alternative answers wherein the participant is prompted to select one of the alternatives.

It is specified above that the video game is displayed on a first display. Worded differently, the video game may provide a display input, or signal, that is displayed on the first display. It is understood that the first display may be a common, or joint, display that displays information to the plurality of users, or participants. It is further understood that the display is arranged to, or configured to, provide visual feedback to the plurality of users, or participants. The first display may be an electronic visual display, or electronic video display, arranged to display a video stream generated by the video game. It is understood that an electronic visual display is a display device that can display images or video that is transmitted electronically. For example, the electronic visual display may be a jumbotron, video projector, a computer monitor, a television set, a tablet. In addition, the electronic visual display may form a video wall, or display wall. It is understood that a video wall is a multi-monitor setup that consists of multiple computer monitors, video projectors, or television sets tiled together contiguously or overlapped in order to form one large electronic visual display.

Alternatively, the video game may be displayed on a plurality of displays. When the video game is displayed on more than one display, each of the one or more displays may be an electronic visual displays. For example, the one or more displays may be a combination of jumbotron, video projector, a computer monitor, a television set and a tablet.

The method may provide inputs to the first display and an additional, or second, display. The second display may be an electronic visual display.

It is understood when the video game is displayed on more than one display, each display may be provided with the same video stream, or display input. Worded differently, the plurality of displays may be provided with the same input that is displayed on each of the first display and the second display. This means that the video stream is mirrored between the displays, and that the same video stream is displayed on the first display and the second display.

Alternatively, each display may be provided with different, or separate, video streams, generated by the video game. Worded differently, the game may generate a first video stream configured to, or arranged to, be displayed on the first display, and a second video stream configured to, or arranged to, be displayed by the second display. The first video stream may correspond to a first game view and the second video stream may correspond to a second game view. Worded differently, the first video stream may constitute the first game view, and the first video stream may be configured to, or arranged to, be displayed on the first display, and the second video stream may constitute the second game view configured to, or arranged to, be displayed one the second display. For example, the first game view may be a first team view, and the second game view may be a second team view. This means that the first display and the second display show video with different views for the same joint, or common, video game.

Additionally, or alternatively, the first video stream may be in a video format adapted to be displayed on the first display and the second video stream may be in a video format adapted to be displayed on the second display. This means that the respective first video stream and second video stream may have a format, or resolution, adapted to be displayed on the respective first display and the second display.

It is further understood that the plurality of displays may be located at different geographical locations. Worded differently, the first display may be located at a first geographical location, such as a first venue, or first arena, and the second display may be located at a second geographical location, such as a second venue, or second arena.

This means that the method may support collaborative gaming for a plurality of users via a plurality of displays that are located at different geographical locations, or venues. This also means that the plurality of users may also be located at different geographical locations, or venues. Worded differently, the method may support distributed collaborative gaming, wherein the plurality of users form a first group of users and a second group of users, wherein the first display and the first group of users are located at a first geographical location, and the second group of users and the second display are located at the second geographical location. For example, collaborative gaming may be supported at a first venue in the form of an arena, and at a second venue in the form of a sports bar, wherein the first group of users form part of the crowd at the arena and the first display is a jumbotron, and the second group of users are bar guest and the second display is a television set. In this example, the first group of users may be given visual video game feedback via the jumbotron and the second group of users may be given visual video game feedback via the television set.

It is specified above that the method provides input to a video game displayed on a first display. The input to the first display may be a video stream. The processor may generate the video stream and provide the video stream to the first display. It is understood that a video stream may comprise continuous video data that is received by, and displayed by, the first display. The video stream may thus comprise video data. In addition, the video stream may also comprise audio data. The video stream may be compressed, or encoded, data. The first display, or further displays, may comprise means to decompress, or decode, and display the data on the display. Alternatively, the data may be uncompressed, or unencoded.

It is specified above that the method comprises the step of dynamically collecting a plurality of control commands from each of a plurality of smart devices. It is also specified above that the system comprises the plurality of smart devices, and the processor is operatively connected to the first display and the plurality of smart devices. It is understood that each participant may have, or control, a smart device. It is further understood that the smart device may be an electronic device, generally connected to other devices or networks via different wireless protocols (such as Bluetooth, Zigbee, near-field communication, Wi-Fi, NearLink, Li-Fi, or 5G). The smart device may communicate with the processor wirelessly. The smart device may be a smartphone, phablet or tablet, smartwatch, smart band or smart glasses, or VR glasses, or AR glasses. It is understood that the smart device may be used to generate control commands by user input, or user activity. Worded differently, the smart device may form a video game controller, configured to generate control commands. Worded differently, the smart device may form a game controller configured to send control commands to the processor and the processor may perform the method and generate inputs to the video game.

It is understood that the smart device may comprise one or more input means, such as a touchpad, touchscreen, button, joystick. The input means may be configured to, or arranged to, generate control commands. The input means may be configured to detect touch input from the user. Additionally or alternatively, the input means may be one or more buttons or keys. For example, the smart device may determine when a button, or sequence of buttons, are pressed and generate control commands based on the pressed button, or sequence of buttons.

The input means may be analogue input means or digital input means.

Additionally or alternatively, the input means may be one or more sensors. The sensor may detect, or determine, or measure, a physical property. The sensor may be an accelerometer for detecting spatial movement, or spatial acceleration, of the smart device. The sensor may be a gyroscope for detecting spatial orientation of the smart device. Worded differently, the sensor may be configured to record a movement, or orientation, of the smart device. The sensor may continuously detect, or determine, or measure, the movement, or orientation, of the smart device. The sensor may be a combined sensor that has a gyroscope and an accelerometer. The sensor may thus be an inertial measurement sensor, or IMS, or an inertial measurement unit, or IMU.

The sensor may be a microphone or sound recording means. The sensor may thereby be configured to record audio input from the user, including voice commands, or voice level or sound intensity.

The sensor may further be a camera, configured to, or arranged to, capture video or images. For example, the camera may be configured to record a face, or facial expression, of the user. The recorded face, or facial expression, may subsequently be interpreted by the smart device to generate a control command. In a further example, the camera may be configured to determine a hand gesture of the user, the smart device may generate a control command based on the determined hand gesture. The camera may be smart device front facing camera or a smart device rear facing camera.

It is specified above that the smart device may communicate with the processor wirelessly. It is understood that each smart device may comprise means configured for communication with the processor and the smart device may be arranged to send control commands to the processor. The smart device may thus comprise wireless communication means and the communication with the processor may be wireless communication.

It is specified above that the method comprises the step of dynamically collecting a plurality of control commands from each of a plurality of smart devices. It is further understood that the control commands may be generated in, or by, the smart device. The control commands may be generated by the smart device based on the input means of the smart device, as discussed above. Worded differently, the control commands may be generated by the smart device based on the one or more input means, such as the touchscreen or sensor(s). The control commands may be compressed, or encoded. Worded differently, the smart device may compress, or encode, the control commands before the control commands are sent to the processor. This means that the control commands are not sent from the smart device in clear text, or clear data format. The method may thus comprise the step decoding, or decompressing, the collected control commands. This step may be performed before the step of ordering the control commands in the queue. The processor may thus be configured to decode, or decompress, the collected control commands. Alternatively, the data may be uncompressed, or unencoded. This removes the need for the processor to decode the collected control commands.

It is specified above that the method comprises the step of dynamically collecting the plurality of control commands from each of the plurality of smart devices. The processor may be configured to dynamically collect the plurality of control commands from each of the plurality of smart devices. Worded differently, the processor may be configured to continuously collect the plurality of control commands from each of the plurality of smart devices. Worded differently, the processor may receive control commands sent from the plurality of smart devices. The processor may comprise communication means configured to communicate with the smart devices by wire or wirelessly. Preferably, the processor is configured to wirelessly receive control commands sent from the plurality of smart devices.

The processor may continuously communicate with the plurality of smart devices and receive control commands that are dynamically collected by the processor. The communication may be two-way communication.

It is further understood that the processor may collect the control commands in a buffer queue, or buffer. Worded differently, the buffer queue may temporarily store the collected control commands. The buffer queue may be a single buffer queue. Alternatively, the buffer queue may be formed by a plurality of buffer queues. This means that the collected control commands may be assigned, or may populate, the plurality of buffer queues. It is understood that in this example, each control command of the plurality of control commands, may be assigned or may populate, one of the plurality of buffer queues. This allows for simple distribution of the buffer queues to a plurality of processors.

Alternatively, to the processor collecting the control commands in one or more buffer queues, the processor may collect the control commands in the queue, and the control commands may be ordered in said queue. This means that the processor does not first collect the control commands in a buffer queue, before the collected control commands are ordered in the queue.

It is understood that the plurality of smart devices, or the number of smart devices, may be larger than 10 devices. Alternatively, the number of smart devices, may be larger than 100, such as 1000 or 10000 devices. The processor may be configured to collect the plurality of control commands from the plurality of smart devices.

It is specified above that the processor may be configured to dynamically collect the plurality of control commands from each of the plurality of smart devices. It is understood that the number of collected control commands per unit time may be larger than 100, 1000, 10 000, or 100 000, control commands. Worded differently, the number of collected control commands may be 100, 1000, 10 000, 100 000, per time unit, such as per second. The method may thus support collaborative gaming for a large number of smart devices that each may send a plurality of control commands per unit time.

It is specified above that the method comprises the step of ordering the control commands in a queue. The processor may be configured to order the control commands in the queue. Worded differently, the processor may arrange, or sequence, the control commands, in the queue.

The control commands may be continuously collected and ordered in the queue. This means that the processor collects the control commands in the queue, and orders the control commands in the queue continuously as new control commands are collected. The step of ordering collecting and ordering the control commands in the queue may comprise collecting and ordering control commands in more than one queue, such as a plurality of queues. Worded differently, the method may comprise the steps of collecting the control commands in a first queue and a second queue and ordering the control commands in the first queue and the second queue. This may allow for more than one processor to concurrently implement the method, each processor managing a queue.

The control commands may be ordered temporally. Worded differently, the control commands may be ordered based on control command timestamps. This means that the control commands are ordered related to time. The control commands may be ordered in the queue in order from the earliest to the latest timestamp. Alternatively, the control commands may be ordered in the queue from the latest to the earliest timestamp. The commands may be ordered in the queue based on the time when the commands were generated, the time the control commands are sent by the smart device or the time the control commands are received by the processor. For example, the control commands may comprise time information and the control commands may be ordered sequentially in the queue from earliest to latest time information.

Additionally, or alternatively, the control commands may be ordered based on a control command characteristic. It is understood that the control commands may have control command characteristics such as distinguishing traits, or qualities, or properties, and the processor may be configured to order the commands in the queue based on the distinguishing traits, qualities, or properties. The control command characteristics may further relate to the input means of the smart devices used to generate the control commands. Worded differently, the control commands may be ordered in the queue based on the smart device input means used to generate the control commands. For example, control commands from input means, such as a touchpad, touchscreen, button, joystick may be ordered higher in the queue compared to control commands generated by the one or more sensors. Alternatively, the control commands from input means, such as a touchpad, touchscreen, button, joystick may be ordered lower in the queue compared to control commands generated by the one or more sensors. The method may thereby prioritize control commands in the queue based on the input means used to generate the control commands. This means that the control commands with specific characteristics may be ordered higher in the queue.

It is specified above that each control command has an identifier. It is understood that an identifier is data that identifies a source of origin of the control command. The identifier may be metadata. It is understood that metadata is a set of data that describes and gives information about other data.

The identifier may provide information of what smart device, and in extension what user, sent the packet comprising the control command. Worded differently, the identifier may comprise a smart device identifier. Alternatively, or in addition, the identifier may be, or comprise, a unique user identifier, that identifies the user of the smart device that sent the control command. In the context, it is understood that the identifier may form part of the control command data that is sent from each smart device. This also means that the identifier is not a packet identifier, or data packet identifier, such as used by a data transfer protocol to identify a source of a packet. For example, the control command data sent from the smart devices may comprise the control command data and the identifier.

It is understood that the unique user identifier may be used to track video game progress, to exclude, or moderate, specific users or smart devices.

It is understood that the identifier may be encoded. For example, the identifier may comprise a user token, or hash, that can be decoded by the processor to identify a specific smart device or user. Worded differently, the identifier may be a token, or hash, and the method may comprise the step of decoding the token, or hash.

The token may be generated by the smart device and shared with the processor. For example, the unique user identifier may be a tokenized username, email address or phone number. Alternatively, the token may be generated by the processor and communicated from the processor to the smart device. The token may subsequently be transmitted from the smart device to the processor with the control commands. The identifier may thereby be encoded to obscure the identity of the user or the smart device, when the encryption key, or decryption key, is not known. The token may represent a hash of the username, email address or phone number of the smart device.

In a further alternative, the token may be a session ID, or session token, that is generated by the smart device or the processor, before the game is started, such as during sign-up, or registration of the smart device. The session ID may subsequently be shared between the smart device and the processor.

Alternatively, the identifier may be unencoded. This means that the identifier is sent in plain text

It is understood that the ordering of control commands in the queue may be based on the identifier. Worded differently, the queue may be ordered using the control command identifiers. For example, the ordering of the queue may prioritize specific identifiers.

It is specified above that the method comprises the step of ordering the control commands in a queue. The identifier may comprise a timestamp. Worded differently, the identifier may comprise information that identifies the time at which the control command was generated, or sent, from the smart device. It is specified above that the method may order the queue temporally. Worded differently, the method may order the queue based on the timestamp. For example, the timestamp may indicate, or give information of, on the time when the control command was generated, the time the control command was sent by the smart device or the time the control command was received by the processor.

It is specified above that the method comprises the step of sequentially determine, or derive, continuous subsets of the control commands in the queue. Worded differently, the method may select, or form, continuous subsets of control commands in the queue. It is understood that each subset may comprise a plurality of control commands. The method may continuously assign control commands in the queue to subsets of control commands.

It is understood that the subsets of control commands, may form part of all of the control commands collected into the queue. Worded differently, each subset of control commands may comprise a part, or portion, of the total number of control commands collected and ordered in the queue. This means that the subset may comprise a number of control commands of the queue that is less than the total number of control commands collected in the queue.

Alternatively, a subset may comprise all of the control commands in the queue. For example, if the number of control commands in the queue is low, a subset may comprise the number of control commands in the queue, or all of the control commands in the queue. This means that the subset is formed by all of the control commands in the queue.

The step of sequentially determining, or deriving, continuous subsets of the control commands in the queue, may be based on a filter, or selection criteria. This means that the method may apply, or use, a filter to determine, or derive, the subsets of control commands from the ordered queue. The filter may include a time window representing a period of time, a threshold value representing a number of collected control commands, or a specific control command indicating the start of a new subset.

In one example, the continuous subsets may be derived from a time window representing a period of time. Worded differently, the filter may be a temporal filter. The time window may be a fixed time, such as a fixed number of seconds or parts of a second. The time window may be less than a second, or milliseconds. This means that each subset may comprise control commands with a timestamp that is within the time window. It is further understood that the time window may have a start time and an end time. It is specified above that each control command may comprise an identifier and that the identifier may comprise a timestamp. The continuous subsets of control commands may thus comprise control commands that have a timestamp within the time window. Worded differently, the subsets of control commands may comprise control commands with a timestamp that falls within the time window, or has a timestamp that is between the start time and the end time, of the time window.

It is understood that a time window may "move" in time. After the time window representing the start time and the end time has been applied to the ordered queue to determine, or derive, a first subset of control commands, the time window may move, or the start time and the end time may change, and the time window may be applied to the ordered queue to select a new subset of control commands. It is understood that the time window may be overlapping. This means that part of the control commands of the first subset of control commands may also be included in the second subset of control commands.

Alternatively, the time window may be a tumbling time window. It is understood that a tumbling time window may be a series of fixed-sized, non-overlapping and contiguous time intervals. This means that control commands included in the first subset of control commands are not included in the second subset of control commands. The time window may thus be non-overlapping.

It is understood that the control commands that form the first subset of control commands may be different, or separate, from the control commands that form the subsequent subset of control commands.

Time window overlap may provide a smoother input for the video game may be provided.

In another example, the continuous subsets may be derived from a threshold value representing a number of collected control commands. Worded differently, the continuous subsets may be derived when the queue comprises a fixed number of collected and ordered control commands. This means that the subset is derived when the number of control commands in the queue is above the threshold value. The threshold value may be a fixed threshold value. The threshold value may be 100, or 1000, or 10000. The threshold value may be greater than 10000 control commands.

Alternatively, the threshold value may be a variable threshold value. It is understood that the variable threshold may be dynamically adjusted based on number of smart devices. Worded differently, the number of smart devices may be used to adjust the threshold value. For example, the method may adjust the threshold value as control commands are collected. In one example, the threshold value is adjusted based on the number of smart devices that send control commands, or the number of participating smart devices.

In a further example, the continuous subsets may be derived from a specific control command indicating the start of a new subset. The specific control command may indicate a change in scenery of the video game. For example, during gameplay the collected and ordered control commands may comprise the specific control command, and the continuous subsets may be derived based on the specific control command.

It is also specified above that the control commands may be ordered based on a control command characteristic. The ordered queue may thus comprise the plurality of control commands ordered based on control command characteristics. The subset may thus be determined, or derived, to comprise control commands with the same, or equal, control command characteristics. For example, when the input means are used to input both control commands to control a movement of an avatar, as well control commands to perform an action of the avatar, the one subset of control commands may contain only control commands to control a movement of an avatar and another subset may contain only control commands to perform an action of the avatar.

It is specified above that the step of sequentially determining, or deriving, continuous subsets of the control commands in the queue, may be based on a filter, or selection criteria. The filter may be a fixed, or static, filter. Alternatively, the filter may be adjusted during gameplay. Worded differently, the filter may be adjusted, or altered, during gameplay to determine, or derive, continuous subsets of the control commands in the queue when the control command characteristics of the collected control commands change.

It is specified above that the method comprises the step of sequentially determining, or deriving, continuous subsets of the control commands in the queue. It is understood that the step of sequentially determining, or deriving, continuous subsets of the control commands in the queue, may be performed for control commands in the queue that have not yet been selected or included in, or that does not yet form part of, a subset of control commands. Once a control command has been selected, or included, in a subset, the control command may be marked as included in a formed, or derived, subset. Alternatively, control commands that have been included in a subset may be removed from the ordered queue.

Alternatively, control commands of the queue that have been included in a subset may be overwritten as new control commands are collected and ordered in the queue.

The method may further comprise the step of storing, or logging, subsets of control commands. The stored, or logged, subsets of control commands may be compared to current control commands. This means that previous subsets of control commands may be used to validate current, or present, subsets of control commands.

It is specified above that the method comprises the step of sequentially performing statistical calculations on the continuous subsets. Worded differently, statistical calculations may be performed, on each determined subset of control commands. It is understood that statistical calculations involve analysis, and inference of conclusions from quantitative data.

It is further understood that the statistical calculations performed on the subset may generate, or render, an output, or result. It is understood that the result is a numeric value, or values. It is further understood that the result may be used as input to the video game. Worded differently, the results may be the input to the video game. For example, the result may be the most common, or most recurring, control command of the subset of control commands. This means that the result may be the control command selected the most for the plurality of users for a specific time period.

Worded differently, the method may analyze the continuous subsets by statistical calculation performed on the continuous subsets. The statistical calculation may determine the central tendency of the control commands of the subset. For example, the statistical calculations may determine the mean value, median value, and/or mode value of the control commands in each subset. This means that the statistical calculation may determine the value that best represents the control commands in each subset. In extension this enables the most popular, or commonly occurring, control command of the plurality of users to be determined.

It is understood that the when statistical calculations have been performed on the subset of control commands, the subset may be removed, or deleted, from the queue.

It is specified above that the method comprises the step of sequentially determining inputs to the video game based on the statistical calculations. Additionally, or alternatively, the method may comprise validating the results from the statistical calculations. Worded differently, the result, or output, from the statistical calculation performed on each subset of control commands may be validated. Validate is understood to involve to confirm, or to verify, that the result from the statistical calculation is accurate, or reliable, and meets the type expected, or possible, based on the control commands. In extension validating may involve ensuring that the result is correct, complete, and consistent, and that it has been collected or processed properly according to predefined rules or specifications. For example, the processor may determine whether the result obtained from the statistical calculation is valid and conform to rules of the video game, such as that the inputs are valid game inputs acceptable by the video game. The step of validating may thereby determine, or detect, exploiting, or cheating, by one or more users, or smart devices. Based on validating the results from the statistical calculations, the method may determine inputs to the video game. Worded differently, the method may provide game inputs, wherein the inputs are an aggregated results of the control commands of each, or a plurality, of subset of control commands. The inputs may be communicated by the processor to the video game to control the video game progress, or events.

Additionally, or alternatively, the method may further comprise the step of validating the collected control commands. Worded differently, the collected control commands may be validated, to determine if the collected control commands are valid. For example, the control commands may be validated to determine that the control commands are in a format that corresponds to the video game that is played. The step of validating the control commands may further include comparing the control commands to determine that the control commands are within ranges that correspond to human input. This may prevent cheating or exploits, wherein collected control commands are generated using malicious software.

Additionally, or alternatively, the method may further comprise the step of validating the smart device that sent control commands. Worded differently, the step of validating the smart device may comprise comparing the identifier to a whitelist of smart devices. This means that the method may reject control commands sent from banned, or blocked, smart devices, or smart devices with identifiers that are not on the whitelist. This has the further technical effect that control commands sent by devices masquerading as smart device may be rejected. This may also aid in preventing game cheating, as control commands sent from a banned smart device may be rejected and not included in subsets of control commands.

Additionally, or alternatively, the method may comprise validating the determined subsets of control commands in the queue. Worded differently, the step of validating control commands may further include validating determined subsets of control commands. This may be performed before the step of performing statistical calculations on the determined subsets of control commands. For example, after determining a subset of control commands, the method may perform the step of validating the determined control commands. The step may thus aid in validating the input to the statistical calculations. This may reduce the risks that the output, or result, from the statistical calculations is incorrect.

It is specified above that the method may comprise the step of validating the results from the statistical calculations. It is understood that the step of determining inputs to the video game based on the statistical calculations, may involve interpretation of the result from the statistical calculations to form inputs to the video game. For example, the method may interpret the results from the statistical calculations to form, or emulate, input to the video game. The method may thus aggregate control commands from a plurality of smart devices that originate from a first type of input means and provide emulated input to the video game that is in a second type of input means. For example, the method may aggregate control commands from a touchscreen on the plurality of smart devices and provide gamepad like input to the video game. This means that the plurality of user may collaboratively play a video game without the need to use the gamepad, or input means, the video game was designed, or programmed, for.

The method may thus provide collaborative video gameplay wherein the plurality of users, via the plurality of smart devices, collaboratively and collectively can control the video game, by aggregating the plurality of control commands to form inputs to the video game that reflects the collective will of the plurality of users.

It is specified above that the method comprises the step of sequentially determining, or deriving, continuous subsets of the control commands in the queue. The continuous subsets may be applied at a tick rate. Worded differently, the subsets may be divided, or determined, a number of times per unit of time. The tick rate may thus control the number of iterations of determining, or deriving, continuous subsets, per unit time. The tick rate may have, or define, a frequency at which frequency the subsets are determined, or divided. The tick rate may be fixed. This means that the method divides subsets, a fixed, or static, number of times per unit of time. The tick rate may be at least 1 Hz, or at least 5 Hz, or at least 10 HZ. The tick rate may be less than 10 Hz, 5 Hz, or 1 Hz. The tick rate may be between 1 Hz and 10 Hz.

Alternatively, the tick rate may be adjustable. This means that the method divides subsets, a variable time, or varies the number of times per unit of time, the subsets are derived. The tick rate may be adjustable and may change during gameplay. For example, the tick rate may be adjusted based on events or scenery in the video game. In addition, the tick rate may be adjusted based on the type of video game. For example, when the game is a quiz, the tick rate may be adjusted to a lower value. This may reduce the need for computational resources of the processor. It is understood that a low tick rate may reduce latency and improve gameplay by reducing the time needed to process control commands from a large amount of users.

Additionally, or alternatively, the method may comprise the step of dynamically adapting the tick rate to one or more performance metrics. It is understood that performance metrics may include the number of collected control commands per unit time, the number of smart devices, the number of control commands in the queue, the network performance, or available system resources for the statistical calculations. This means that the tick rate may be adapted to optimize performance based on metrics that are performance dependent. The tick rate may thus be adjusted to improve performance. For example, the performance metric may include a processor load, or system resources that are available for the processor. When the utilization of system resources or network resources is high, the tick rate may be adjusted, to improve performance and reduce the risk of performance degradation of the processor, or the system as a whole.

In one alternative, the latency of the system, or the time required to perform the method steps, may be measured, or determined by the system, and the tick rate may be adjusted to reduce, or improve, latency.

The method may further comprise the step of dynamically adapting the size of the continuous subsets to the number of collected control commands per unit time, the number of control commands in the queue, or the number of smart devices. It is specified above that each subset may comprise a plurality of control commands. Each subset of control commands may have a size. The size may be the number of control commands. Alternatively, the size may represent a data size, or amount of data, for the subset of control commands. The size of continuous subset may be adapted to the number of collected control commands per unit time. This means that the size of the subsets may be adapted based on the number of control commands collected by the processor per unit time. The step of dynamically adapting the size of the continuous subsets may be performed in combination with adjusting the tick rate. This may provide a synergy effect in that both the size of the subsets and the rate at which the subsets are applied are both adjusted concurrently.

Additionally, or alternatively, the size of continuous subsets may be adapted based on the number of control commands in the queue. For example, when the number of control commands in the queue is low, the size of the continuous subsets may be increased. This may allow for fewer statistical calculations to be performed per unit time and may improve system efficiency or reduce computational resources.

Additionally, or alternatively, the size of continuous subset may be adapted based on the number of smart devices. For example, when the number of smart devices increases, or is high, the number of control commands of the queue may also increase, or be high. Adjusting the size may then aid in performance, or reduce latency, for the processor, or system.

It is specified above that the method comprises the steps of dynamically collecting a plurality of control commands from each of a plurality of smart devices, each control command having an identifier; and ordering the control commands in a queue. It is further specified above that the identifier may comprise a time stamp and that the continuous subsets may be derived from a time window representing a period of time. The method may further comprise the step of rejecting a control command from the queue if it has a timestamp that is determined to have elapsed, or a unique sender identifier that has already been included in a current continuous subset. Worded differently, control commands that have a timestamp that has been elapsed may be rejected from the queue. This means that collected control commands with a timestamp that is old, or has elapsed, may be rejected, or dropped, or removed, from the queue. For example, delays or problems in communication between the smart device and the processor may result in that one or more control commands are received by the processor late, or after a time has elapsed. The control command may thus relate to, or be relevant to, past events, or actions, in the video game. The method may then reject the control command, or commands, from the queue.

Alternatively, the method may reject a control command that has a unique sender identifier that has already been included in a current, or determined, continuous subset of control commands. This means that control commands that have already been included in a subset may be rejected from, or removed from, or be overwritten in, the queue. This reduces the risk that a plurality of subsets of control commands contain the same one control command collected from the same unique sender, or user.

Additionally, or alternatively, the method may comprise the step of rejecting one or more control commands from the queue if the number of control commands in the queue exceeds a threshold value, or queue threshold value. Worded differently, the queue may be limited to hold, or store, a maximum number of control commands. When the number of control commands in the queue exceeds the threshold value, one or more control commands may be rejected, or dropped, or removed. The queue may thereby limit the maximum number of control commands in the queue.

The one or more control commands that are rejected may be based on the order of the queue, or the order of the control commands in the queue. It is specified above that the control commands may be ordered, in the queue, based on control command timestamps. In extension the rejected one or more control commands may be based on the timestamp of the individual control commands. The method may reject the one or more control commands in the queue with the earliest timestamp. Thereby control commands with higher relevance to the present, or current, activity in the video game may remain in the queue, whereas control commands that relate to past activities in the video game may be rejected.

Additionally, or alternatively, the one or more control commands that are rejected may be based on the control command characteristics of the control commands in the queue. For example, the queue may comprise control commands with characteristics for controlling the movement of an avatar in the game, as well characteristics for performing an action of the avatar in the game. The control commands that relate to movement may then be prioritized over the control commands that relate to action, in the video game. The method may the drop one or more control commands that relate to performing an action of the avatar in the video game.

The threshold value may be fixed, or numeric, value. Alternatively, the threshold value may be variable, or adjustable. Worded differently, the threshold value may be based on, or adjusted by, the performance rate of the statistics. A performance rate of the or statistical calculations, or statistics, may determine the threshold value. Worded differently, the threshold value may be adjusted, or determined, based on the time needed to perform statistical calculations on a subset of control commands. The time needed may be an average time needed to perform statistical calculation on a plurality of subsets of control commands. For example, in the case the average time needed to perform statistical calculations on a subset of control commands increases, the threshold value may be adjusted, such as reduced. This may improve performance of the statistical calculations and reduce latency in the system.

Alternatively, the threshold value may be dynamically adjusted to reflect a fraction of the total active smart devices. This may aid in performing the method with a high number of participants, or participating smart devices.

It is specified above that system comprises the processor operatively connected to the first display and the plurality of smart devices and configured to perform the method according to the first aspect of the proposed technology. The processor may further be operatively connected to, or communicate with, a transient memory, such as random access memory, or RAM. The processor, the non-transient memory and the transient memory may form part of a computer.

It is specified above that the first display may be located at a first geographical location, such as a first venue, or arena. The processor may be located at the first geographical location, or at the same venue, or arena, as the first display. Alternatively, the processor may be located remotely from the first geographic location. Worded differently, the processor may be a remote processor. The processor may be located at a data center. The processor may form part of a cloud computing arrangement.

It is further understood that steps of the method may be performed by one processor. Alternatively, steps of the method may be performed on one or more processors. The one or more processors may form part of a distributed computing arrangement. For example, the step of performing statistical calculations on the subsets may be performed on more than one processor. Worded differently, the method may sequentially determine, or derive, continuous subsets of control commands in the queue, and a plurality of processors may concurrently, or in parallel, perform statistical calculations on the continuous subsets. Performing statistical calculations on the plurality of processors allows for computational parallelization of statistical calculations.

It is further understood that when the number of smart devices is high, performing the method, or at least steps of the method, on multiple processors may aid in performance. It is specified above that the method may comprise the step of dynamically adapting the tick rate to one or more performance metrics. It is understood that when the plurality of processors is used the tick rate may be adapted to the performance rate of the combined plurality of processors. For example, when the number of smart devices is high, statistical calculations may be performed on the plurality of processors, thus distributing computational load on individual processors.

It is specified above that the tick rate may thus be adjusted to improve performance. It is also specified above that the steps of the method may be performed on one or more processors. It is understood that instead of adjusting the tick rate, the method may engage, or activate, more processors to perform the steps of the method. This means that the method may start-up, or spin-up, more processors when the number of participants, or participating smart devices, increase. For example, when the performance metric, such as the processor load, or the system resources that are available for the processor, have a high utilization, additional processors may be activated for load distribution.

The method may combine adjusting the tick rate and activating additional processors to perform the method. This means that additional processors may be activated together with adjusting the tick rate. Adjusting the tick rate and activating more processors thus have a synergy in improving performance of the method.

It is specified above that the method comprises the step of sequentially validating and determining inputs to the computer game based on the statistical calculations. It is further specified above that the processor is operatively connected to the first display.

The video game may be executed, or run, on the processor. This means that the processor may run the video game. It is understood that this may involve running program instructions, or executable code, that controls game logic, game input, and generates audio and video output to the display. It is further understood that the game input is the validated and determined inputs to the computer game above. This means that the method provides game inputs to the game.

Alternatively, the video game may be executed, or run, on a further, separate, processor. The processor, or processors, that executes the method may then be operatively connected to the further processor that executes, or runs, the video game. The further processor may form part of a cloud gaming computer, or cloud processor. This further means that the further processor may be operatively connected to, or communicate with, the first display, and is configured to provide a video stream to the first display. Worded differently, the processor may be operatively connected to the first display via the further processor.

It is specified above that the method dynamically collects the plurality of control commands from each of the plurality of smart devices. The processors may thus receive control commands from each of the plurality of smart devices. It is further understood that the processor may send, or communicate, information to the plurality of smart devices. The processor may thus be operatively connected to the smart devices via two-way communication. This means that the communication may be both from the smart devices to the processor and from the processor to the smart devices. For example, the processor may send progress information or a score to the plurality of smart devices. In addition, the processor may send information relating to the game to the plurality of smart devices. Such information may relate to which character individual smart devices are configured to generate control commands for. In one example, the video game is pong and the processor may send information to the plurality of smart devices that indicate, or assign, the plurality of smart devices to a first moveable bar, and to a second moveable bar. This allows the system to perform gameplay wherein the plurality of smart devices are assigned to control different characters, or aspects, of the video game.

The smart devices may further be arranged to execute software, or an app, or client software, that indicates the type of input each user can use, to generate control commands. This means that each smart device may display a user interface that guides, or aids, the user to generate the control commands that are sent to the processor.

It is understood that the video game may have compute rate, or decision rate. It is understood that compute rate may refer to how quickly a game engine or game system can process and render game logic, physics, AI, and graphics. The compute rate may thus relate to at least the logic decision rate of the video game. The method may further comprise the step of dynamically adapting the compute rate, to the performance metrics or to the tick rate. Worded differently, the continuous subsets may be divided, or determined, or applied, a number of times per unit of time, or at the tick rate, and the compute rate of the video game may be adapted to the tick rate. This means that the compute rate of the video game may be adjusted based on the tick rate. For example, the compute rate may be lowered, when the tick rate is low. Adjusting the compute rate of the video game to the tick rate may improve performance, and reduce latency, or experienced latency of the users. In extension it is understood that the when the tick rate is low, the time allowed for the processor to perform the method steps and provide input to the video game is high. Reducing the compute rate may aid in performance, and provide smoother video gameplay experience.

It is specified above that the computer program product may be stored on the non-transient memory. The processor may further be operatively connected to, or in communication with, a transient memory. It is understood that the transient memory may store the collected control commands from the plurality of smart devices, the ordered queue, the determined, or derived, continuous subsets, the results from the statistical calculations, and the determined inputs to the video game.

### Brief description of the drawings

A more complete understanding of the abovementioned and other features and advantages of the proposed technology will be apparent from the following detailed description of preferred embodiments in conjunction with the appended drawings, wherein:
- Fig. 1: illustrates a first example of a system for providing input to a video game that is displayed on a first display;
- Fig. 2: illustrates a further example of the system for providing input to a video game that is displayed on a first display and a second display;
- Fig. 3: illustrates a first example of a method for providing input to a video game displayed on a first display; and
- Figs. 4-12: illustrates further examples of the method; and
- Fig. 13: illustrates a further example of the system for providing input to a video game that is displayed on the first display.

### Description of the drawings

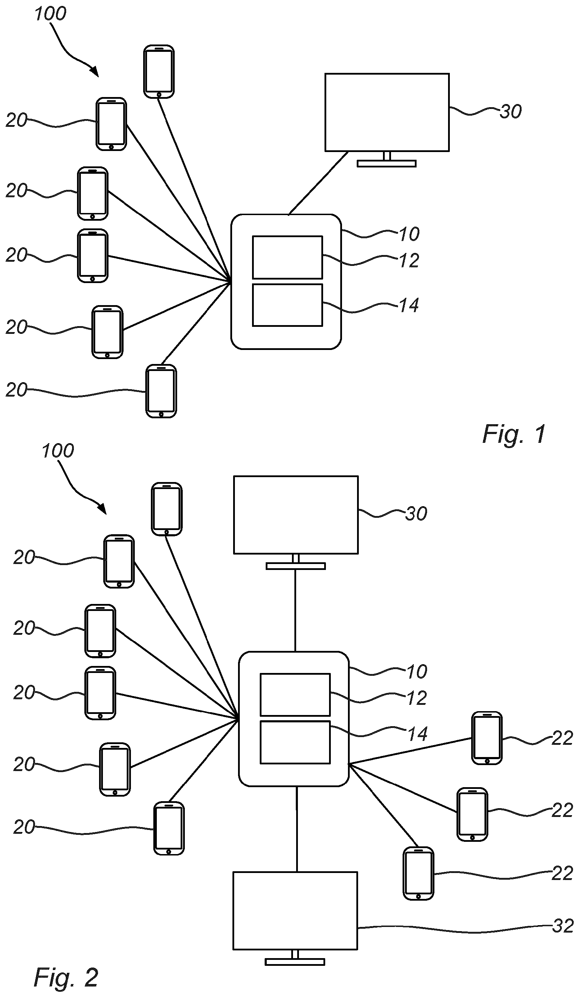

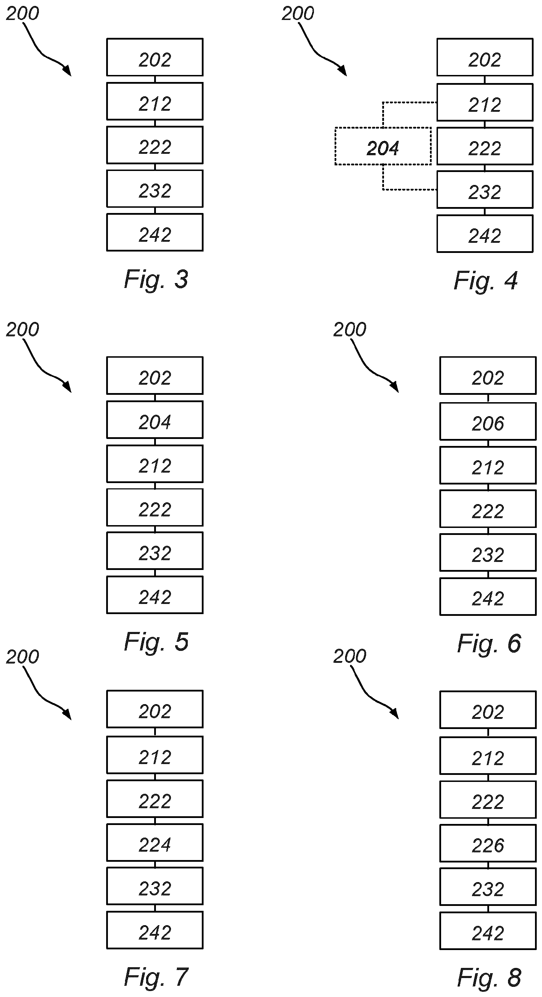

Fig. 1 shows a system 100 for providing input to a video game that is displayed on a first display 30. The system 100 comprises: the first display 30, a plurality of smart devices 20, and a processor 10 that is operatively connected to the first display 30 and the plurality of smart devices 20. The processor 10 is configured to perform the method shown in Figs. 4-9.

Fig. 1 shows that the plurality of smart devices 20 are configured to, or arranged to, send control commands to the processor 10. The control commands are generated by, or generated in, each smart device 20. The smart devices 20 are shown in the form of smart phones 20, or tablets 20. The smart devices 20 comprises an input means that can be used to generate the control commands. Each smart phone 20 further has sensors that also can be used to generate control commands. The first display 30 is operatively connected to the processor 10 and can receive a video stream from the processor. In the example shown in Fig. 1, the processor 10 also runs the game code, or game logic and code that generates graphics that is communicated to the first display 30 to be displayed on the first display 30. The processor 10 is operatively connected to a non-transient memory 12 and to a transient memory 14. The non-transient memory 12 and the transient memory 14 is shown to form part of the processor 10. However, the non-transient memory 12 can also be located remotely to the processor 10, or at a different geographical location relative to the processor 10.

Fig. 2 shows a further example of the system 100 of Fig. 1. Fig. 2 shows that the processor is operatively connected to a first group of smart devices 20, and to a second group of smart devices 22. The first group of smart devices 20 are located at a first geographical location and the second group smart devices 22 are located at the second geographical location. At the second geographical location a further, or second, display is located. Fig. 2 shows the system 100 providing collaborative gaming for the first group of smart devices 20 at the first geographical location and the second group of smart devices 22 at the second geographical location. The users of the first group of smart devices 20 and the users of the second group of smart devices 22 can thereby play together and the processor 10 can display the progress of the joint video game to the first users at the first geographical location and to the second users at the second geographical location.

In a further example, the first display 30 and first group of smart devices 20 and the second display 32 and second group of smart devices 22 can be located at the same geographical location, or the same venue. In this example, the first display 30 and the second display 32 can form part of displays of a jumbotron. The first display and the second display can also display separate scenes, or views, from the same video game.

Fig. 3 shows that processor 10 is configured to perform the method steps of: 202 dynamically collecting a plurality of control commands from each of a plurality of smart devices, each control command having an identifier. The method step of 212 ordering the control commands in a queue. The step of 222 sequentially determining, or deriving, continuous subsets of the control commands in the queue. The step 232 sequentially performing statistical calculations on the continuous subsets and sequentially validating and 242 determining inputs to the video game based on the statistical calculations.

In step 202 dynamically collecting a plurality of control commands from each of a plurality of smart devices, each control command having an identifier, the processor may receive and collect a plurality of control commands from each of a plurality of smart devices. The processor thereby receives control commands from each of the participating smart devices. The smart devices preferably communicate with the processor wirelessly. Each smart device may be operatively connected to, or in communication with, the processor via a mobile, or wireless, connection. Each smart device can thereby send control commands to the processor. Each smart device continuously sends control commands that are received by the processor.

The processor receives the plurality of control commands from the smart devices. Each control command has an identifier that can be used to identify the smart device, or the user of the smart devices.

The identifier can further comprise a timestamp, that refers to the time at which the control command was generated by, or sent from, the smart device.

In step 212 the processor orders the control commands in a queue. The queue thus comprises received control commands from the plurality of smart devices. The queue is ordered, preferably in relation to time, or temporally, using the timestamp of each control command. After ordering the queue an ordered queue is formed.

In step 222 sequentially determining, or deriving, continuous subsets of the control commands in the queue, the processor sequentially determines, or derives, or selects, continuous subsets of the control commands in the queue. Each subset comprises a plurality of control commands. Each subset can be based on a filter, or selection criteria. For example, the filter may include a time window representing a period of time, a threshold value representing a number of collected control commands, or a specific control command indicating the start of a new subset.

When the selection criteria is the time window, the subsets of control commands can be determined, or derived, using a rolling time window.

In step 232 sequentially performing statistical calculations on the continuous subsets, the processor performs statistical calculations on the subsets of control commands. The statistical calculations can apply statistical calculations on the subset of control commands and provide a result, or output, that is the aggregate, or most common, control command in the subset of control commands. The result can be the statistical mean or statistical average of the control commands in the subset of control commands, and the result may be a value that best represents the control commands of the subset.

In step 242 sequentially determining inputs to the video game based on the statistical calculations, the processor determines inputs to the video game. The determined inputs to the video game are thereby an aggregate of all of the control commands of a subset of control commands.

Fig.4 illustrates a further example of the method for providing input to a video game displayed on the first display. The method of Fig. 3 comprises the step 204 rejecting a control command from the queue if it has a timestamp that is determined to have elapsed, or a unique sender identifier that has already been included in a current continuous subset.

Fig. 4 shows that the step 204 is performed in parallel with the step 222 sequentially determining, or deriving, continuous subsets of the control commands in the queue. When the continuous subsets are determined, the method can reject, or not include, control commands in the subset if they have a timestamp that is determined to have elapsed, or a unique sender identifier that has already been included in a current continuous subset.

Fig. 5 shows an alternative to Fig. 4, wherein the step 204 is performed after, the step 202 dynamically collecting a plurality of control commands from each of a plurality of smart devices. When a control command is rejected, the control command is removed from the queue, or marked to not be included in future subsets.

Fig. 6 illustrates a further example of the method for providing input to the video game displayed on the first display. The method of Fig. 6 comprises the step 206 rejecting one or more control commands from the queue if the number of control commands in the queue exceeds a threshold value. In step 206 the processor rejects, or removes, one or more control commands, when the number of control commands in the queue has reached an upper limit. Step 206 thereby aids in preventing a queue overflow that results from trying to add a control command to a full queue. The threshold value is preferably a factor of the maximum number of control commands the queue can hold, or value representing the full queue.

Fig. 7 illustrates a further example of the method for providing input to a video game displayed on the first display. The method of Fig. 7 comprises the step 224 dynamically adapting the size of the continuous subsets to the number of collected control commands per unit time, the number of control commands in the queue, or the number of smart devices. Each subset can comprise, or hold, a number of control commands. In step 206 the size of the continuous subsets are adapted to the number of control commands that are received per unit time the number of control commands currently in the queue or the number of smart devices. The method thereby adapts the size of the continuous subsets of control commands for the purpose of queue management. The method can thereby prevent queue overflow. Fig. 7 shows that step 224 is performed after the step 222. In another example step 224 is performed before the step 222.

Fig. 8 illustrates a further example of the method for providing input to the video game displayed on the first display. In step 222 sequentially determining, or deriving, continuous subsets of the control commands in the queue, the continuous subsets are applied, or determined, or derived, at a tick rate. In step 226 dynamically adapting the tick rate to one or more performance metrics; the tick rate, or the rate at which the continuous subsets are applied, is adapted to one or more performance metrics. The performance metrics the tick rate is adapted to can include the number of collected control commands per unit time, the number of smart devices, the number of control commands in the queue, the network performance, or available system resources for the statistical calculations.

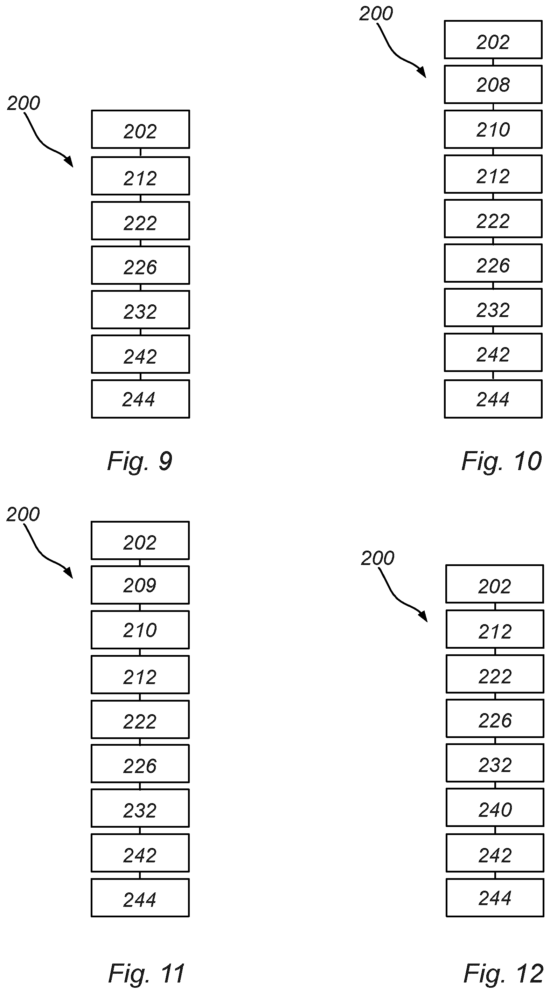

Fig. 9 illustrates a further example of the method for providing input to the video game displayed on the first display. The method provides compute rate limits to the video game in step 244 dynamically adapting the compute rate, or compute rate, to the performance metrics or to the tick rate. The method thus provides both inputs to the video game and compute rate limits to the video game. The compute rate limits may be an upper compute rate limit, that instructs the game to limit the compute rate to below the upper compute rate limit.

Fig. 10 illustrates a further example of the method for providing input to the video game displayed on the first display. After the step 202 dynamically collecting a plurality of control commands from each of a plurality of smart devices, each control command having an identifier, the processor may receive and collect a plurality of control commands from each of a plurality of smart devices, the method comprises the step 208 of validating the smart device that sent control commands. When a smart device is banned, or not part of a whitelist, the control command collected from the smart device can be rejected in the step 210 of rejecting a control command based on the step 208 of validating the smart device that sent the control command.

Fig. 11 illustrates a further example of the method for providing input to the video game displayed on the first display. The method of Fig. 11 differs from the method of Fig. 10 in that step 208 of validating the smart device is replaced by step 209 of validating the collected control commands. This means that the instead of validating the smart device, the collected control commands themselves are validated. Step 210 of rejecting a control command is based on the step 209 of validating the collected control commands.

Fig. 12 illustrates a further example of the method for providing input to the video game displayed on the first display. In step 240 of validating the results from the statistical calculation, the output from the statistical calculations is validated. This step is performed before the step 242 sequentially determining inputs to the video game based on the statistical calculations. Before determining the inputs to the video game based on the statistical calculations, the results from the statistical calculations are validated to determine if the results from the statistical calculations are valid.

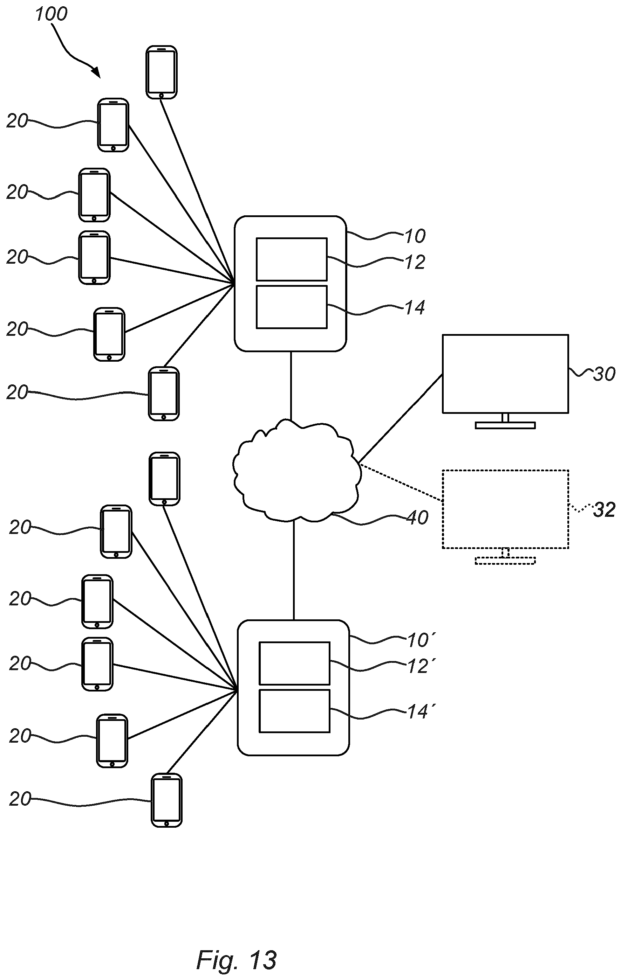

Fig. 13 shows a further example of the system 100 of Fig. 1 for providing input to a video game that is displayed on a first display 30. The system of Fig. 13 has a first processor 10 and a second processor 10', each operatively connected to a plurality of smart devices 20. The first processor 10 and the second processor 10' are further operatively connected to a computing cloud 40, or cloud computer 40, that executes, or runs, the video game itself. The cloud computer 40 receives video game inputs from the first processor 10 and the second processor 10'. The cloud computer 40 is further operatively connected to the first display 30, and the first display 30 is configured to display a video stream generated by the video game executed on the cloud computer 40. Fig. 13 further shows that the cloud computer 40 can be connected to the second display 32.

## Claims

1. A method (200) for providing input to a video game displayed on a first display (30), the method comprises:
- (202) dynamically collecting a plurality of control commands from each of a plurality of smart devices, each control command having an identifier,
- (212) ordering the control commands in a queue,
- (222) sequentially determining, or deriving, continuous subsets of control commands in the queue
- (232) sequentially performing statistical calculations on the continuous subsets,
- (242) sequentially determining inputs to the video game based on the statistical calculations.

2. The method (200) of claim 1, wherein the step of ordering the control commands in the queue is according to the identifier.

3. The method (200) of claim 1-2, wherein each identifier comprises a timestamp.

4. The method (200) of claim 1-3, wherein each identifier comprises a smart device identifier.

5. The method (200) of claim 1-4, wherein the continuous subsets are applied at a tick rate of at least 1 Hz, or at least 5 Hz, or at least 10 Hz.

6. The method (200) of claim 1-5, further comprises:
- (226) dynamically adapting the tick rate to one or more performance metrics.

7. The method (200) of claim 6, wherein the performance metrics include:
- a number of collected control commands per unit time,
- the number of smart devices,
- a number of control commands in the queue,
- a network performance, and/or available system resources for the statistical calculations.

8. The method (200) of claim 1-7, wherein the continuous subsets are determined, or derived, from:
- a time window representing a period of time,
- a threshold value representing a number of collected control commands, or
- a specific control command indicating the start of a new subset.

9. The method (200) of claim 1-8, further comprises:
- (224) dynamically adapting a size of the continuous subsets to the number of collected control commands per unit time, a number of control commands in the queue, or a number of smart devices.

10. The method (200) of claim 5 or 7, wherein the video game has a compute rate, or decision rate, and the method comprises:
- (244) dynamically adapting the compute rate, to the performance metrics or to the tick rate.

11. The method (200) of claim 1-10, wherein the number of smart devices is larger than 10, 100, 1 000, or 10 000.

12. The method (200) of claim 1-11, wherein a number of collected control commands per unit time, or per second, is larger than 100, 1000, 10 000, or 100 000.

13. The method (200) of claim 1-12, further comprise:
- (204) rejecting a control command from the queue if it has a timestamp that is determined to have elapsed, or a unique sender identifier that has already been included in a current continuous subset.

14. The method (200) of claim 1-13, further comprise:
- (206) rejecting one or more control commands from the queue if the number of control commands in the queue exceeds a threshold value.

15. The method (200) of claim 14, wherein the threshold value may be based on the performance rate of the statistics.
